# EUROPEAN PATENT APPLICATION

(11) **EP 3 632 672 A1**
(43) Date of publication of application: **08.04.2020**
(21) Application number: 18198583.9
(22) Date of filing: 04.10.2018
(51) Int. Cl.: B32B 5/24, B32B 5/26, B32B 7/04, B32B 7/08, B32B 15/04, B32B 15/08, B32B 15/18, B32B 15/20, B32B 37/22, B32B 38/04, B32B 1/04, B32B 1/06, B32B 3/02, B32B 3/04, B32B 3/08, B32B 3/26

(54) **TAILORED HYBRID BLANKS**

(71) Applicant: Zephyros, Inc., Romeo, MI 48065 (US)
(72) Inventor: The designation of the inventor has not yet been filed
(74) Representative: Kutzenberger Wolff & Partner

(57) **Abstract**

The present invention relates to a laminate comprising at least a cover layer and a functional layer.

## Description

The present invention relates to a laminate comprising at least a cover layer and a functional layer.

Such laminates are known from the state in the art and are, for example, used in certain formed panel applications where the multi-layer structure provides functional benefits such as acoustic improvements or weight reduction. -. The laminate is for example a metal-polymer-metal structure and is provided as a laminate roll-stock, all layers of the laminate being continuous. The desired elements are cut out of the roll-stock.

The skilled person has the ongoing problem to improve such laminates and the method to produce them
This problem is solved with a laminate comprising at least a cover layer and a functional layer, wherein the layers are cut, preferably die-cut prior to lamination.

The disclosure regarding this embodiment also applies to the inventive methods and vice versa.

The present invention relates to a laminate with one, preferably two cover layers, which sandwich a functional layer. The cover layer can be made of metal, a woven or non-woven fiber-structure and/or a plastic or composite material. The cover layer may be a mesh made from metal- and/or plastic-material. The thickness of each cover layer need not be constant but may vary in any direction as desired. In case there are two cover layers, each cover material can be different. A preferred metal for the cover layer is steel or aluminum. Each cover layer may have a corrosion protection, such as galvanization or coating on one or both sides.

The functional layer is made from a polymer material of any desired thickness, that is suitable for further forming of the laminate. Preferably, the polymer material may be foamed or otherwise expanded under the influence of heat or other trigger. The functional layer may comprise more than one polymer material, which can be mixed and/or provided in layers. Preferably, the functional layer is at least locally not oronly slightly electrically or thermally conductive.

According to the present invention, all layers for one laminate are cut, preferably die-cut, prior to their lamination; i.e. not like the current roll stock materials which are first laminated and this laminate is then die-cut, but each cover layer and the functional layer are cut to the desired shape before they are laminated. The layer and cover layers may all be cut to different shapes, or the layer and one cover layer may be cut to the same shape that is different to the other cover layer, or the layer and the cover layer may all be cut to the same shape. Scrap from cutting of the each cover layer and functional layer may be removed and re-processed without contamination from other layers.

Preferably, the laminate comprises two cover layers and the functional layer in between. Preferably, the precut layers of the laminate will be placed relative to each other as needed and then lamination takes place.

Prior to lamination, each cover layer is preferably a flat, relatively thin element, for example between 0.2-2mm thickness.

The thickness of the cover layer may be identical or different. The thickness of one or each cover layer may vary over its extension. The cover layers may be made from the same or different materials. The cover layer may comprise one or more layers. The geometry of the cover layers can be identical, similar or different. At least one cover layer may comprise one or more projection(s) at the perimeter which may enable secondary operations including welding or hem flange forming. The covers can be made from a, preferably tailor, rolled sheet, preferably metal sheet. which can thicker in one section than in another. For example, one or both cover layers might be thinner where the functional layer is and thicker where there is no functional layer, or it may have different thicknesses across the laminate.

The geometry of the functional layer may differ from the geometry of one or both cover layers. The thickness of the functional layer may vary over its extension, for example between 0.01 - 3mm.

The material of the two cover layers may be different. For example, one can be made from steel, while the other is made from aluminum and/or an alloy comprising aluminum. Further examples include one metal cover and one composite cover, or one composite cover and one non-woven or woven cover.

According to a preferred the two cover layers are hem-flanged, preferably around at least a portion of the circumference of the laminate.

Preferably, the laminate comprises different materials, more preferably at discreet locations, e.g. one or more patches of reinforced material and or one or more patches of expandable material, to provide functional performance different to a continuous layer.

According to a preferred embodiment, the functional layer comprises/includes a local recess, a local hole or open channel, preferably a channel that leads to the perimeter of the laminate, a local indentation and/or a local insert. Each recess/hole/indentation can for example be used to allow welding energy to pass through with minimum impedence, as thermal insulation and/or to accommodate an insert, for example to enhance welding or to locally reinforce the laminate. Each recess/indentation can save weight. Each recess can provide local thermal insulation. Each hole or channel can provide an outlet for gases generated during welding.

The material of each insert is preferably different from the main material of the functional layer. Each insert is preferably provided in a recess/hole/indentation of the main functional layer. The insert extends only locally within the functional layer, particularly to provide specific properties to this layer. The insert may have electric- and/or thermal-conductive properties to allow welding. The insert may be made from an expandable material, for example to allow forming of the cover layer(s), particularly during heating of the laminate. Other potential insert features are: e.g. reinforcement(s), sensor(s), wiring etc. These features can be incorporated into the of the laminate prior to lamination and stamping.

Preferably, the cover layer and/or the functional layer comprises a fiber- and/or pulverant-material. The fibers can be for example glass fibers or a plastic- and/or metal-mesh. The pulverant functional layer preferably has a thickness of 0.01 - 0,05 mm, preferably 0.02 - 0,04 mm and even more preferably has a specific shape. According to a preferred embodiment, a mask is used to apply the pulverant material to one of the cover layers. After the application, the mask is preferably removed from the cover layer.

Preferably, the density of the cover layer and/or the functional layer varies over its extension.

The problem is also solved with a method to produce the inventive laminate, wherein the cover layer and the functional layer is cut, preferably die-cut, out of a stock and then laminated together, preferably under the influence of heat and/or pressure.

The disclosure regarding this embodiment also applies to the inventive methods and vice versa.

Preferably, a recess, hole, channel and/or an indentation is provided into the functional layer prior to lamination.

Preferably, an insert is added, particularly to the functional layer prior to lamination. This can be done manually or automatically, for example by a robot.

Preferably, the shape of the laminate remains unchanged after lamination and until fixation to a structure. Consequently, the laminate is, for example, is not re-rolled after it has been produced.

Preferably, the cover layer and/or the functional layer comprises a fiber- and/or pulverant-material. The fibers can be for example glass fibers or a plastic- and/or metal-mesh. The pulverant functional layer preferably has a thickness of 0.01 - 0,05 mm, preferably 0.02 - 0,04 mm and even more preferably has a specific shape. According to a preferred embodiment, a mask is used to apply the pulverant material to one of the cover layers. After the application, the mask is preferably removed from the cover layer.

Another subject matter of the present invention is a method to use the inventive laminate, wherein the shape of at least one cover layer changes during an expansion of the functional layer and/or an expandable insert provided in or at this functional layer. The expansion of the functional layer or insert could occur during or after lamination.

The inventions are now explained according to the Figures. These explanations do not limit the scope of protection.
- Figure 1: shows the inventive method and the inventive laminate
- Figure 2: shows the use of the inventive laminate

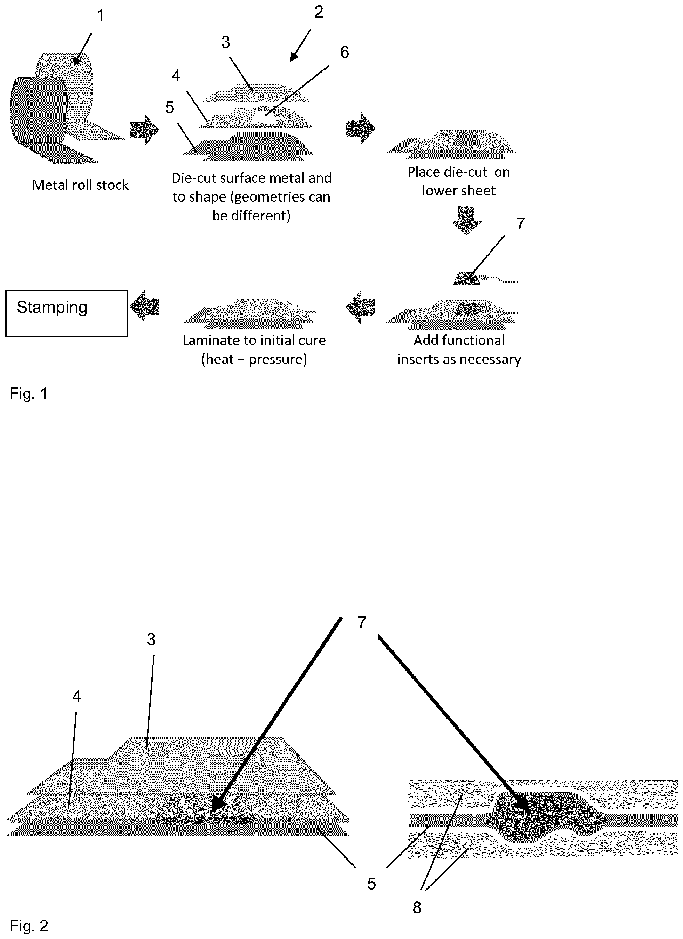

Figure 1 shows the inventive method and the inventive laminate 2, which comprises two cover layers 3, 5 and a functional layer sandwiched in between. Each cover layer 3, 5 and the functional layer can be provided as a roll stock. Prior to laminating the layers together, the individual layers are cut out, preferably die-cut, either separately or in a multi-stage process. The layers 3, 5 of the laminate may have the same shape or a different shape as depicted in the present example. The layers 3, 5 can be of the same or different material and/or of the same or different thickness. The thickness of each layer may vary over its extension, which allows to provide more material where needed and/or less material, where, for example during expansion of the functional layer deformation of the cover layer 3, 5 is desired. Each cover layer may comprise different layers of material. The cover layer may be made from metal- and/or a plastic or composite material. The cover may comprise or may be a mesh, a metal- or a plastic-mesh. The functional layer 4 may comprise one or a multitude of polymer materials. Preferably, the functional layer is at least locally electrically and/or thermally non- or little conductive. The density of one or more layers 3 - 5 may vary over its extension. The functional layer may comprise one or more recesses, holes and/or indentations, which are preferably inserted into the functional layer during the cutting step. In the present case only one recess or hole is depicted. These recesses or holes may function for example to facilitate welding, or as channels, for example for removal of welding gases from the laminate. These recesses or holes may also be left unfilled to function as thermal- and/or electrical insulation. In the present example, one or more inserts 7 is provided in the recess 6. With this insert, the functional layer may achieve local properties and/or functions, that the rest of the functional layer does not have. For example the insert may have other structural properties, another electrical- and/or thermal-conductivity, may be foamable/expandable, may be a sensor, or may comprise a wire or connector. Hence the area of the recess or hole can be designed as needed without giving the rest of the functional layer the same properties. The insert can be placed manually or by a machine into the recess. The functional layer 4 may have a different shape than at least one of the cover layers 3, 5.

After the layers have been cut, they are stacked relative to each other as needed and are then laminated together, preferably under the influence of heat and/or pressure. The circumference of the laminate can at least locally be hem-flanged. The stamping of the laminate is preferably the last processing step, before the laminate is, for example, assembled to the body a vehicle or the like.

Figure 2 shows the use of the inventive laminate. The cover layers 3, 5 and/or the functional layer, here the insert are preferably designed such, that during expansion of the functional layer, here the insert 7, at least one cover layer, here both, deform for example to match surface geometry provided by a tool containing the laminate during expansion. The expansion preferably takes place in a tool 8, preferably prior to the use of the resulting laminate.

### Reference signs:

- 1: Roll or Sheet Stock
- 2: Laminate
- 3: First cover layer, metal layer
- 4: Second layer, functional layer
- 5: Third cover layer, metal layer
- 6: Recess, hole indentation
- 7: Insert
- 8: Tool

## Claims

1. Laminate (2) comprising at least a cover layer (3, 5) and a functional layer (4), wherein the layer (3 - 5) are cut, preferably die-cut prior to lamination.

2. Laminate (2) according to claim 1, wherein it comprises two cover layers (3, 5) and the functional layer (4) in between.

3. Laminate (2) according to one of the preceding claims, wherein the geometry of the cover layers (3, 5) and/or the geometry of one cover layer (3, 5) and the functional layer (4) is different.

4. Laminate (2) according to claims 2 or 3, wherein the material of the two cover layers (3, 5) is different.

5. Laminate (2) according to claims 2 - 4, wherein the two cover layers (3, 5) are hem-flanged.

6. Laminate (2) according to one of the preceding claims, wherein the functional layer (4) comprises a local recess, a local hole, a local indentation (6) and/or a local insert.

7. Laminate (2) according to claim 6, wherein the local recess (6) is provided in areas where welding of the laminate to a structure takes place.

8. Laminate (2) according to claims 6 or 7, wherein the insert is a reinforcement, comprises a sensor and/or a wiring.

9. Laminate (2) according to one of the preceding claims, wherein the functional layer comprises at least two different polymers.

10. Laminate (2) according to one of the preceding claims, wherein the cover layer (3, 5) and/or the functional layer (4) comprises a fiber- and/or pulverant-material.

11. Method to produce a laminate (2) according to one of the preceding claims, wherein the cover layer (3, 5) and the functional layer is cut, preferably die-cut out of a stock material and then laminated together, preferably under the influence of heat and/or pressure.

12. Method according to claim 11 wherein one or more recesses, holes and/or indentations are provided into the functional layer prior to lamination.

13. Method according to claims 10 - 12, wherein one or more inserts (7) are added prior to lamination.

14. Method according to claims 10 - 13, wherein the shape of the laminate remains unchanged after lamination and until fixation to a structure.

15. Method to use a laminate according to one of the preceding claims, wherein the shape of at least one cover layer changes during an expansion of the functional layer and/or one or more inserts provided in or at this functional layer.
